Europäisches Patentamt

European Patent Office

Office européen des brevets

(19)

(11) Numéro de publication: **0 260 169**
**B1**

(12) **FASCICULE DE BREVET EUROPEEN**

(45) Date de publication du fascicule du brevet:
18.10.89

(21) Numéro de dépôt: 87401836.9

(22) Date de dépôt: 07.08.87

(51) Int. Cl.⁴: **B60T 13/52**

(54) Servomoteur pneumatique d'assistance au freinage.

(30) Priorité: 10.09.86 FR 8612667

(43) Date de publication de la demande:
16.03.88 Bulletin 88/11

(45) Mention de la délivrance du brevet:
18.10.89 Bulletin 89/42

(84) Etats contractants désignés:
DE ES GB IT

(56) Documents cités:
DE-A- 3 113 271
DE-A- 3 232 664
FR-A- 2 456 018
GB-A- 2 145 486

(73) Titulaire: BENDIX France Société Anonyme dite:,
126, rue de Stalingrad, F-93700 Drancy(FR)

(72) Inventeur: Gautier, Jean-Pierre, 46ter Avenue Louis
Blanc, F-93600 Aulnay Sous Bois(FR)

(74) Mandataire: Lejet, Christian et al, Division Technique
Service Brevets BENDIX Europe 126, rue de Stalingrad,
F-93700 Drancy(FR)

**Description**

La présente invention concerne les servomoteurs pneumatiques d'assistance au freinage, du type comprenant un boîtier, une structure de paroi mobile divisant le boîtier en deux chambres, constituée d'un ensemble d'un plateau métallique et d'une membrane et solidarisée centralement à une structure de moyeu abritant un moyen de valve de distribution, présentant une partie tubulaire s'étendant à l'extérieur du boîtier et coopérant à coulissement avec un ensemble de guidage et d'étanchéité porté par le boîtier, et comportant au moins une partie de corps en matériau plastique formant des canaux de communication entre les chambres et le moyen de valve de distribution, ce dernier comportant un élément de clapet susceptible de coopérer avec deux sièges de clapet concentriques formés respectivement par la partie de corps du moyeu et par un plongeur de valve couplé à un organe d'entrée du servomoteur et ayant au moins une partie coulissant dans un insert tubulaire s'étendant dans la partie de corps et dans lequel est disposé un disque de réaction coopérant avec un organe de sortie du servomoteur, le plateau de la structure de paroi mobile comprenant une partie annulaire centrale pincée entre un épaulement radial de l'insert et une surface annulaire d'extrémité de la partie de corps du moyeu.

Un servomoteur de ce type est décrit dans le document GB-A-2 145 486.

Dans les servomoteurs pneumatiques d'assistance classiques, la structure de moyeu est constituée d'une pièce massive monobloc en matériau plastique dans laquelle la partie tubulaire s'étendant vers l'arrière, à l'extérieur du boîtier, est prolongée, vers l'avant, par un évasement sur la périphérie duquel sont montés le plateau et la membrane de la structure de paroi mobile et dans lequel sont aménagés le plongeur de valve et le disque de réaction, dans un agencement délicat à réaliser, compte tenu en particulier des canaux de communication et de la qualité de surface requise pour la partie tubulaire arrière, et présentant un poids global important.

Le document GB-A-2 145 486 se rapporte à un agencement de moyeu présentant sensiblement les mêmes inconvénients malgré l'aménagement d'un insert tubulaire permettant de soustraire à la partie de corps du moyeu la plupart des efforts d'actionnement transmis à l'organe de sortie, la solidarisation entre l'insert et la partie de corps s'avérant d'autre part délicate et onéreuse.

La présente invention a pour objet de proposer un servomoteur pneumatique du type défini généralement plus haut, de conception allégée, robuste, de faible coût de fabrication et permettant par simple interchangeabilité de composants de sous-ensembles diverses adaptations convenant à différents véhicules pourvus de tels servomoteurs d'assistance au freinage.

Pour ce faire, selon une caractéristique de l'invention, l'insert tubulaire est solidarisé directement à la partie annulaire centrale du plateau à laquelle est également solidarisé un élément tubulaire formant la partie tubulaire de la structure de moyeu et dans lequel est montée et fixée la partie de corps du moyeu en matériau plastique avec sa surface d'extrémité en appui contre la partie annulaire centrale du plateau de la structure de paroi mobile.

Selon une caractéristique plus particulière de l'invention, l'insert et l'élément tubulaire sont métalliques et sont tous deux soudés à la partie annulaire centrale du plateau, la partie de corps du moyeu étant avantageusement fixée dans l'élément tubulaire par sertissage d'une zone de ce dernier dans au moins un des canaux de communication s'étendant sensiblement radialement de la partie de corps du moyeu.

Avec un tel agencement, la partie de corps du moyeu est réduite à un noyau de faibles dimensions et de faible poids de forme tubulaire ne présentant pas de problèmes de fabrication, l'assemblage métal sur métal des autres composants de la structure de moyeu pouvant s'effectuer aisément de manière automatisée et autorisant de nombreuses adaptations ponctuelles.

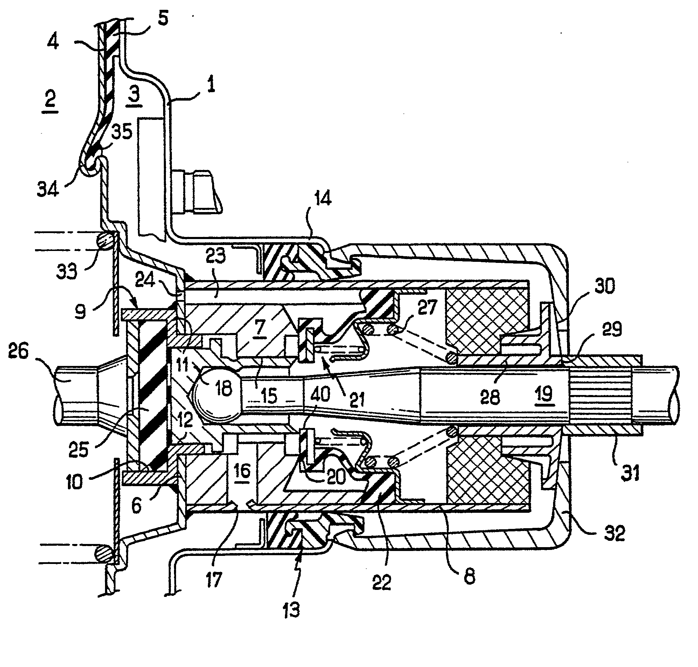

D'autres caractéristiques et avantages de la présente invention ressortiront de la description suivante d'un mode de réalisation, donné à titre illustratif mais nullement limitatif, faite en relation avec le dessin annexé, sur lequel :

La figure unique est une vue en coupe longitudinale partielle d'un servomoteur pneumatique d'assistance au freinage selon l'invention.

Sur la figure unique on a représenté la partie centrale arrière d'un servomoteur pneumatique d'assistance au freinage du type à dépression comprenant un boîtier, dont on reconnaît la partie centrale de la coquille arrière 1, divisée intérieurement en une chambre avant, ou chambre à dépression 2, et une chambre arrière, ou chambre de travail 3, par une structure de paroi mobile constituée d'un ensemble d'un plateau métallique 4 et d'une membrane souple 5 dont la périphérie est prise entre les deux coquilles du boîtier. Conformément à l'invention, le plateau 4 comprend une partie annulaire centrale plane 6 à laquelle est solidarisée une structure de moyeu comprenant essentiellement une partie de corps en matériau plastique 7, un élément tubulaire 8 et un insert tubulaire étagé 9. L'insert 9 est conformé de façon à présenter une partie antérieure formant un alésage interne 10 et se raccordant, par un épaulement radial 11, à une partie postérieure définissant un alésage interne 12 de plus petit diamètre que l'alésage 10. L'élément tubulaire 8 est soudé avec étanchéification par son extrémité avant sur la face arrière de la partie annulaire centrale 6 du plateau 4 et coopère à coulissement étanche, par sa périphérie, avec un ensemble de guidage et d'étanchéité 13 monté dans une portion centrale tubulaire arrière 14 de la coquille arrière 1 du boîtier. L'insert 9 est monté avec sa partie postérieure s'étendant dans l'ouverture centrale de la partie annulaire centrale 6 du plateau 4 et est soudé avec étanchéification sur la face antérieure de cette partie annulaire central 6 avec l'épaulement 11 en contact avec cette dernière. La partie de corps 7 en matériau plastique comporte un alésage central étagé 15 avec lequel communique au moins un canal de communication radial 16 débouchant vers l'extérieur. La partie de corps 7 est montée dans l'élément tubulaire 8 avec sa face antérieure en appui contre la partie annulaire centrale 6 du plateau 4, typiquement par sertissage local des parois d'un orifice 17 de l'élément tubulaire 8 dans le canal de communication 16, la partie postérieure de l'insert 9 s'étendant dans l'extrémité antérieure de l'alésage étagé 15. Préalablement à ce montage de la partie de corps 7 dans l'élément tubulaire 8, un plongeur de valve 18, couplé à une tige d'entrée 19 du servomoteur, destinée à être reliée à une pédale de freinage (non représentée), est monté à coulissement dans l'alésage étagé 15 et dans l'alésage 12 de la partie postérieure de l'insert 9, après quoi celui-ci est solidarisé au plateau 4. L'extrémité arrière du plongeur de valve 18 forme un premier siège de clapet 40 concentrique à un second siège de clapet 20 formé par la partie de corps 7, ces deux sièges de clapet étant destinés à coopérer avec un élément de clapet 21 sollicité élastiquement dans la direction des sièges de clapet. Dans le mode de réalisation représenté, l'élément de clapet 21 comprend une partie périphérique ou bourrelet de montage 22 emmanché et maintenu dans l'élément tubulaire 8 et bloqué en appui contre l'extrémité annulaire arrière de la partie de corps 7. Cette dernière comprend, par exemple au voisinage de sa périphérie, au moins un passage axial 23 établissant, via un orifice correspondant 24 formé dans la partie annulaire centrale 6 du plateau 4, la communication entre la chambre de dépression 2 et l'élément de clapet 21. Dans l'alésage 10 de la partie antérieure de l'insert 9 est disposé un disque de réaction 25 interposé entre l'extrémité arrière d'une tige de sortie 26 du servomoteur (destinée à être couplée à un piston d'un maître-cylindre, non représenté) et l'épaulement 11 de l'insert 9, d'une part, et la face frontale du plongeur de valve 18, d'autre part.

Dans le mode de réalisation représenté, un ressort 27 de rappel de la tige d'entrée 19 prend appui, d'une part sur le support en tôle de montage de l'élément de clapet 21 dans l'élément tubulaire 8 et d'autre part sur la face antérieure d'un organe de butée 28 supporté à coulissement libre sur la tige 19 et comportant, à son extrémité arrière, des surfaces de butée radialement disjointes 29 et 30 susceptibles de coopérer respectivement avec un anneau de butée 31 serti dans une position déterminée sur la tige 19, et avec un organe de butée stationnaire 32 avantageusement supporté à son extrémité antérieure par l'ensemble de guidage et d'étanchéité 13, dans un agencement permettant d'obtenir une course morte d'actionnement minimale pour le servomoteur.

On notera que, conformément aux objets de l'invention, la partie de corps 7 se présente sous une forme et un volume réduit ne présentant aucune difficulté de fabrication pour constituer, avec l'élément tubulaire 8 et l'insert 9 soudé sur le plateau, un moyeu allégé mais particulièrement robuste et de faible coût de fabrication dont les éléments peuvent être aisément interchangés selon les caractéristiques demandés pour le servomoteur. En particulier, selon le rapport de réaction recherché, il suffit de modifier l'insert 9 pour y adapter le disque de réaction aux dimensions adéquates sans devoir modifier en conséquence la partie de corps 7.

Selon un aspect de l'invention, le plateau 4 est formé, radialement à l'extérieur d'un redan formant appui pour le ressort 33 de rappel de la structure de piston, avec une gorge annulaire 34 permettant le montage du bourrelet central 35 du diaphragme 5.

**Revendications**

1. Servomoteur pneumatique d'assistance au freinage, comprenant : un boîtier (1), une structure de paroi mobile (4,5) divisant le boîtier en deux chambres (2,3), constituée d'un ensemble d'un plateau métallique (4) et d'une membrane (5), et solidarisée centralement à une structure de moyeu abritant un moyen de valve de distribution , présentant une partie tubulaire (8) s'étendant à l'extérieur du boîtier et coopérant à coulissement avec un ensemble de guidage et d'étanchéité (13) porté par le boîtier (1), et comportant au moins une partie de corps (7) en matériau plastique formant des canaux de communication (16,23) entre les chambres (2,3) et le moyen de valve de distribution, ce dernier comportant un élément de clapet (21) susceptible de coopérer avec deux sièges de clapet concentriques (20,40) formés respectivement par la partie de corps (7) et par un plongeur de valve (18) couplé à un organe d'entrée (19) du servomoteur et ayant au moins une partie coulissant dans un insert tubulaire (9) s'étendant dans la partie de corps et dans lequel est disposé un disque de réaction (25) coopérant avec un organe de sortie (26) du servomoteur, le plateau (4) comprenant une partie annulaire centrale (6) pincée entre un épaulement radial (11) de l'insert (9) et une surface annulaire d'extrémité de la partie de corps (7), caractérisé en ce que l'insert tubulaire (9) est solidarisé à la partie annulaire centrale (6) du plateau (4) à laquelle est également solidarisé un élément tubulaire (8) formant la partie tubulaire de la structure de moyeu et dans lequel est montée et fixée la partie de corps (7) avec sa surface d'extrémité en appui contre la partie annulaire centrale (6) du plateau (4).

2. Servomoteur selon la revendication 1, caractérisé en ce que l'élément de clapet (21) comprend une partie périphérique de montage (22) montée dans l'élément tubulaire (8).

3. Servomoteur selon la revendication 2, caractérisé en ce que la partie périphérique de montage (22) de l'élément de clapet (21) est montée en appui contre une extrémité annulaire de la partie de corps (7).

4. Servomoteur selon l'une des revendications 1 à 3, caractérisé en ce que le plateau (4) comporte, radialement à l'extérieur de la partie annulaire centrale (6), une gorge (34) permettant l'accrochage d'un bourrelet de montage central (35) de la membrane (5).

5. Servomoteur selon l'une des revendications précédentes, caractérisé en ce que l'insert (9) est métallique et soudé à la partie annulaire centrale (6) du plateau (4).

6. Servomoteur selon l'une des revendications précédentes, caractérisé en ce que l'élément tubulaire (8) est métallique et soudé à la partie annulaire centrale (6) du plateau (4).

7. Servomoteur selon la revendication 6, caractérisé en ce que la partie de corps (7) est fixée dans l'élément tubulaire (8) par sertissage d'une zone (17) de ce dernier dans au moins un canal de communication sensiblement radial (16) formé dans la partie de corps (7).

8. Servomoteur selon l'une des revendications précédentes, caractérisé en ce qu'il comporte un ressort de rappel (27) de l'organe d'entrée (19) prenant appui sur un élément d'appui (28) supporté à coulissement libre sur l'organe d'entrée et susceptible de coopérer en butée avec une butée stationnaire (32) et avec une butée (31) portée par l'organe d'entrée (19).

9. Servomoteur selon la revendication 8, caractérisé en ce que l'organe stationnaire (32) est un organe de butée solidaire du boîtier.

10. servomoteur selon la revendication 9, caractérisé en ce que l'organe stationnaire de butée (32) est supporté à une de ses extrémités par l'ensemble de guidage et d'étanchéité (13).

## Patentansprüche

1. Pneumatischer Servoantrieb für eine Bremshilfe, mit: einem Gehäuse (1), einer beweglichen Wandstruktur (4, 5), welche das Gehäuse in zwei Kammern (2, 3) unterteilt, aus einer aus einer metallischen Platte (4) sowie einer Membran (5) bestehenden Gruppe gebildet ist und mit einer ein Verteilventilmittel enthaltenden Nabenstruktur zentral fest verbunden ist, die ein rohrförmiges Teil (8) aufweist, das sich außerhalb des Gehäuses erstreckt und mit einer Gruppe zur Lenkung und zur Abdichtung (13), die das Gehäuse (1) trägt, gleitend zusammenwirkt und wenigstens einen Teil eines Kunststoff-Körpers (7) umfaßt, welcher Verbindungskanäle (16, 23) zwischen den Kammern (2, 3) und dem Verteilungsventilmittel bildet, wobei dieses ein Ventilelement (21) umfaßt, das dazu geeignet ist, mit zwei konzentrischen Ventilsitzen (20, 40) zusammenzuwirken, welche durch den Teil des Körpers (7) bzw. durch einen an ein Eingangselement (19) des Servoantriebs angekoppelten Ventil-Tauchkörper (18) gebildet sind, welcher wenigstens einen in einem rohrförmigen Einsatz (9) gleitenden Teil umfaßt, der sich in dem Teil des Körpers erstreckt und in welchem eine Reaktionsscheibe (25) angebracht ist, welche mit einem Ausgangselement (26) des Servoantriebs zusammenwirkt, wobei die Platte (4) ein ringförmiges Zentralteil (6) umfaßt, welches zwischen einer radialen Schulter (11) des Einsatzes (9) und einer ringförmigen Endfläche des Teils des Körpers (7) eingeklemmt ist, dadurch gekennzeichnet, daß der rohrförmige Einsatz (9) mit dem ringförmigen Zentralteil (6) der Platte (4) fest verbunden ist, mit welchem ein das rohrförmige Teil der Nabenstruktur bildendes rohrförmiges Element (8) ebenfalls fest verbunden ist und in welchem der Teil des Körpers (7) angebracht und befestigt ist, wobei seine Endoberfläche sich auf dem ringförmigen Zentralteil (6) der Platte (4) abstützt.

2. Servoantrieb nach Anspruch 1, dadurch gekennzeichnet, daß das Ventilelement (21) ein Montage-Umfangsteil (22) umfaßt, welches in dem rohrförmigen Element (8) angebracht ist.

3. Servoantrieb nach Anspruch 2, dadurch gekennzeichnet, daß das Montage-Umfangsteil (22) des Ventilelementes (21) an einem ringförmigen Endteil des Teils des Körpers (7) abgestützt angebracht ist.

4. Servoantrieb nach einem der Ansprüche 1 bis 3, dadurch gekennzeichnet, daß radial außerhalb des ringförmigen Zentralteiles (6) die Platte (4) eine Nut (34) aufweist, welche das Einhängen eines Wulstes (35) für die zentrale Montage der Membran (5) ermöglicht.

5. Servoantrieb nach einem der vorstehenden Ansprüche, dadurch gekennzeichnet, daß der Einsatz (9) aus Metall besteht und an dem ringförmigen Zentralteil (6) der Platte (4) angelötet oder angeschweißt ist.

6. Servoantrieb nach einem der vorstehenden Ansprüche, dadurch gekennzeichnet, daß das rohrförmige Element (8) aus Metall besteht und an den ringförmigen Zentralteil (6) der Platte (4) angelötet oder angeschweißt ist.

7. Servoantrieb nach Anspruch 6, dadurch gekennzeichnet, daß der Teil des Körpers (7) an dem rohrförmigen Element (8) durch Verstemmen einer Zone (17) desselben in wenigstens einem annähernd radialen Verbindungskanal (16) befestigt ist, welcher in dem Teil des Körpers (7) gebildet ist.

8. Servoantrieb nach einem der vorstehenden Ansprüche, dadurch gekennzeichnet, daß er eine Rückholfeder (27) für das Eingangselement (19) umfaßt, das sich auf einem Abstützelement (28) abstützt, welches auf dem Eingangselement frei gleitend gelagert ist und dazu geeignet ist, mit einem feststehenden Anschlag (32) sowie mit einem durch das Eingangselement (19) getragenen Anschlag (31) wegbegrenzend zusammenzuwirken.

9. Servoantrieb nach Anspruch 8, dadurch gekennzeichnet, daß das feststehende Element (32) ein mit dem Gehäuse fest verbundenes Anschlagelement ist.

10. Servoantrieb nach Anspruch 9, dadurch gekennzeichnet, daß das feststehende Anschlagelement (32) an seinem einen Ende durch die Gruppe zur Lenkung und zur Abdichtung (13) getragen ist.

## Claims

1. Pneumatic brake booster comprising a housing (1) and a movable wall structure (4, 5) which divides the housing into two chambers (2, 3), which consists of an assembly comprising a metal plate (4) and a diaphragm (5) and which is fixed centrally to a hub structure accommodating a distributor valve means, having a tubular part (8) extending to the outside of the housing and cooperating slidably with a guide and sealing assembly (13) carried by the housing (1), and having at least one plastic body part (7) forming communication ducts (16, 23) between the chambers (2, 3) and the distributor valve means, the latter possessing a shutter element (21) capable of cooperating with two concentric shutter seats (20, 40) formed respectively by the body part (7) and by a valve plunger (18) coupled to an input member (19) of the booster and having at least one part sliding in a tubular insert (9) which extends into the body part and in which is arranged a reaction disk (25) cooperating with an output member (26) of the booster, the plate (4) having a central annular part (6) gripped between a radial shoulder (11) of the insert (9) and an annular end face of the body part (7), characterized in that the tubular insert (9) is fixed to the central annular part (6) of the plate (4), to which is also fixed a tubular element (8) which forms a tubular part of the hub structure and in which the body part (7) is mounted and fastened, with its end face up against the central annular part (6) of the plate (4).

2. Booster according to Claim 1, characterized in that the shutter element (21) comprises a peripheral assembly part (22) mounted in the tubular element (8).

3. Booster according to Claim 2, characterized in that the peripheral assembly part (22) of the shutter element (21) is mounted up against an annular end of the body part (7).

4. Booster according to one of Claims 1 to 3, characterized in that the plate (4) has, radially on the outside of the central annular part (6), a groove (34) which makes it possible to attach a central assembly bead (35) of the diaphragm (5).

5. Booster according to any of the preceding claims, characterized in that the insert (9) is metallic and is welded to the central annular part (6) of the plate (4).

6. Booster according to any of the preceding claims, characterized in that the tubular element (8) is metallic and is welded to the central annular part (6) of the plate (4).

7. Booster according to Claim 6, characterized in that the body part (7) is fastened in the tubular element (8) by crimping a zone (17) of the latter into at least one substantially radial communication duct (16) formed in the body part (7).

8. Booster according to any of the preceding claims, characterized in that it has a spring (27) for returning the input member (19), which bears on a bearing element (28) supported in a freely slidable manner on the input member and capable of cooperating, by coming up against them, with a stationary stop (32) and with a stop (31) carried by the input member (19).

9. Booster according to Claim 8, characterized in that the stationary member (32) is a stop member fixed to the housing.

10. Booster according to Claim 9, characterized in that the stationary stop member (32) is supported stone of its ends by the guide and sealing assembly (13).

EP 0 260 169 B1